# EUROPEAN PATENT SPECIFICATION

(11) **EP 2 212 371 B1**
(45) Date of publication and mention of the grant of the patent: **25.07.2012**
(21) Application number: 08840947.9
(22) Date of filing: 23.10.2008
(51) Int. Cl.: C08G 63/183, C08G 63/81

(54) **PROCESSES FOR PREPARING LOW-ACID POLYALKYLENE TEREPHTHALATE FROM DIOL-CAPPED PRE-POLYMER AND LINEAR OLIGOMER RECYCLATE AND USING SUCH IN THE PRODUCTION OF MACROCYCLIC POLYESTER OLIGOMER**
VERFAHREN ZUR HERSTELLUNG VON SÄUREARMEM POLYALKYLENTEREPHTHALAT AUS DIOLVERKAPPTEM PREPOLYMER UND LINEAREM OLIGOMERREZYKLAT UND VERWENDUNG DAVON BEI DER HERSTELLUNG VON MAKROCYCLISCHEM POLYESTEROLIGOMER
PROCÉDÉS PERMETTANT DE PRÉPARER DU POLYALKYLÈNE TEREPHTALATE PEU ACIDE À PARTIR D'UN PRÉPOLYMÈRE COIFFÉ PAR DIOL ET D'UN RECYCLAT D'OLIGOMÈRE LINÉAIRE ET PROCÉDÉS PERMETTANT DE L'UTILISER POUR PRODUIRE UN OLIGOMÈRE DE POLYESTER MACROCYCLIQUE

(30) Priority: 23.10.2007 US 981942 P
(43) Date of publication of application: 04.08.2010
(73) Proprietor: Cyclics Corporation, Schenectady, NY 12308 (US)
(72) Inventor: PHELPS, Peter, D., Williamstown, MA 02167 (US); ANDRUSYSZYN, Paul, M., New Castle, DE 19720 (US)
(74) Representative: Read, David Graham
(86) International application number: PCT/US2008/080999
(87) International publication number: WO 2009/055599

(56) References cited:
- WO-A-2006/104821

## Description

### Field of the Invention

This invention relates generally to the manufacture of low-acid polyalkylene terephthalate (such as polybutylene terephthalate, PBT) for conversion to macrocyclic polyester oligomer (such as cyclic polybutylene terephthalate, cPBT). More particularly, in certain embodiments, the invention relates to manufacture of low-acid polyalkylene terephthalate (such as PBT) from low molecular weight, diol-stopped pre-polymer and linear oligomer recyclate in refluxing solvent (such as ortho-dichlorobenzene, oDCB); the low-acid polyalkylene terephthalate is suitable for advantageous conversion to macrocyclic polyester oligomer (MPO).

### Background of the Invention

International (PCT) Patent Application No. PCT/US2006/010541, (the '541 application) was filed on March 24, 2006, was published as WO2006/104R21 on May 10, 2006. The '541 application describes systems and methods for preparing low-acid polyalkylene terephthalate (such as polybutylene terephthalate, PBT) from which macrocyclic polyester oligomer (MPO) can be advantageously manufactured. Depolymerization of low-acid polyalkylene terephthalate requires less catalyst and proceeds to equilibrium more quickly than depolymerization of higher-acid polyalkylene terephthalate. The use of less catalyst reduces the amount of residual oligomers formed, thereby reducing separation and filtration processing costs. The residual oligomer filtrate that does form is less gellular and easier to remove from a product stream when low catalyst concentrations are used.

In addition to its use in the production of MPO, the low-acid polyalkylene terephthalate is useful in its own right. For example, the low-acid polyalkylene terephthalate can be stabilized to prevent generation of acids, thereby resulting in reduced corrosion problems when used as a polymer in injection molding or other process applications.

In the '541 application, low-acid PBT is produced by reacting butanediol (BDO) and dimethylterephthalate (DMT) in an organic solvent such as ortho-dichlorobenzene (oDCB) in the presence of a catalyst at about atmospheric pressure and at about the boiling point of the solvent (for example, less than about 200 °C). However, preparation of the low-acid PBT adds to the overall cost of preparing MPO. Even though depolymerization of commercially-available PBT requires more catalyst and may result in an MPO product of lower quality, it may be less expensive to prepare MPO this way, depending on the relative scale of the manufacturing processes involved and the price of the feedstocks used.

There is a need for alternate methods of preparing low-acid polyalkylene terephthalate, such as polybutylene terephthalate (PBT), from which macrocyclic polyester oligomer (MPO), such as cyclic polybutylene terephthalate (cPBT) can be advantageously manufactured.

### Summary of the Invention

The invention described in the present application relates to methods for producing low-acid polyalkylene terephthalate from which MPO can be advantageously manufactured. Low-acid polyalkylene terephthalate (e.g., PBT) is prepared by reacting low molecular weight, diol-stopped pre-polymer (e.g., PBT pre-polymer) with a linear oligomer recyclate (e.g., a by-product of MPO production), preferably in a refluxing organic solvent, such as ortho-dichlorobenzene (oDCB). The methods are preferably performed below about 240 °C, and more preferably below about 200 °C, and can be performed without a vacuum. The low-acid PBT is more suitable for MPO production than commercially-available PBT resins.

In certain embodiments, the linear oligomer recyclate is a by-product of the depolymerization/cyclization of the low-acid polyalkylene terephthalate, thereby synergistically increasing overall conversion of reactants to the MPO product. Furthermore, low molecular weight, diol-capped PBT pre-polymer may be prepared and converted to MPO less expensively than commercially-available PBT.

These methods offer a variety of synergies for coupling PBT and cPBT manufacturing processes. For example, a traditional melt PBT facility or unit operation could produce the low viscosity diol-capped pre-polymer at reduced cost, since the long residence times, high temperature, and high vacuum conditions necessary to build molecular weight would not be required. The acid-stopped linears from the cPBT production process can then be combined with the pre-polymer and effectively recycled.

In one aspect, the invention relates to a method for preparing a low-acid polybutylene terephthalate (PBT) product, where the method includes maintaining a mixture at a temperature no greater than about 240 °C and a pressure at least about atmospheric pressure to produce a low-acid PBT product, the mixture at least initially including a diol-rich PBT pre-polymer, a linear oligomer recyclate from depolymerization of PBT, an organic solvent, and a catalyst. The end caps of the diol-rich PBT pre-polymer are greater than 95 mol.% diol, greater than 98 mol.% diol, greater than 99 mol.% diol, or greater than 99.5 mol.% diol. The pre-polymer preferably has a molecular weight no greater than about 40,000 g/mol, no greater than about 35,000 g/mol, no greater than about 30,000 g/mol, no greater than about 25,000 g/mol, no greater than about 20,000 g/mol, or no greater than about 15,000 g/mol. The solvent preferably includes ortho-dichlorobenzene. In certain embodiments, the low-acid PBT product has acid content no greater than about 15 meq/kg, no greater than about 10 meq/kg, no greater than about 8 meq/kg, or no greater than about 7 meq/kg. In certain embodiments, the diol-rich PBT pre-polymer has not undergone solid state polycondensation prior to its introduction to the linear oligomer recyclate (it is not necessary to use high MW, commercially-manufactured PBT having undergone solid state polycondensation). The mixture is preferably maintained under solvent reflux, and the method includes removing water from the refluxing solvent. In certain embodiments, the weight ratio of the linear oligomer recyclate to the diol-rich PBT pre-polymer is at least initially greater than about 10:90, greater than about 15:85, greater than about 20:80, greater than about 25:75, or greater than about 30:70. In certain embodiments, the linear oligomer recyclate is isolated from a depolymerization process by-product prior to reaction with the diol-rich PBT pre-polymer, wherein the recyclate is isolated by exposure of the depolymerization process by-product to a temperature of at least about 200°C for at least about 5 minutes thereby allowing precipitation of a metal-containing residue, and by filtration of the depolymerization by-product following precipitation of the metal-containing residue.

In another aspect, the invention relates to a method for preparing a macrocyclic polyester oligomer (MPO), the method including the steps of: (a) maintaining a mixture at a temperature no greater than about 240 °C and a pressure at least about atmospheric pressure and maintaining a concentration of polymer solids in the mixture within a first range to produce a low-acid polyalkylene terephthalate product having acid content no greater than about 10 meq/kg, the mixture at least initially including a diol-rich polyalkylene terephthalate pre-polymer, a linear oligomer recyclate from depolymerization of a polyalkylene terephthalate, an organic solvent, and a catalyst; and (b) reducing the concentration of polymer solids in the mixture following step (a) and maintaining the concentration of polymer solids in the mixture within a second range in the presence of heat, thereby depolymerizing the low-acid polyalkylene terephthalate product from step (a) to produce an MPO. The description of elements of the embodiments above can be applied to this aspect of the invention as well. In certain embodiments, step (a) includes maintaining the mixture under solvent reflux and removing water from the refluxing solvent. In certain embodiments, the linear oligomer recyclate in step (a) is a by-product of the depolymerization of step (b). In certain embodiments, the concentration of polymer solids in the mixture is maintained within a range from about 30 wt.% to about 50 wt.% in step (a), then reduced and maintained within a range from about 0.75 wt.% to about 1.5 wt.%. in step (b). The solvent preferably includes ortho-dichlorobenzene.

In certain embodiments, the polyalkylene terephthalate product includes butylene terephthalate units and/or ethylene terephthalate units. Step (a) is preferably conducted at a temperature between about 170 °C and about 210 °C. In certain embodiments, the mixture in step (b) further includes a catalyst, which may or may not be the same as the catalyst in step (a). In certain embodiments, the mixture in step (b) includes a titanium depolymerization catalyst at a concentration no greater than about 2 mol Ti per 100 mol alkylene terephthalate repeat units. In certain embodiments, the mixture in step (b) includes a titanium depolymerization catalyst at a concentration from about 0.25 to about 1.25 mol Ti per 100 mol alkylene terephthalate repeat units.

In yet another aspect, the invention relates to a continuous or semi-continuous process for preparing a macrocyclic polyester oligomer by depolymerizing low-acid polybutylene terephthalate, the process including: (1) a first unit operation for producing a low-acid polybutylene terephthalate product, wherein the first unit operation maintains a first mixture at a temperature no greater than about 240 °C and a pressure at least about atmospheric pressure, the first mixture at least initially including a diol-rich polybutylene terephthalate pre-polymer, a linear oligomer recyclate from depolymerization of PBT, an organic solvent, and a catalyst, and wherein an output stream including the low-acid PBT product flows from the first unit operation to a second unit operation; and a second unit operation for depolymerization of the low-acid PBT, wherein the second unit operation exposes a second mixture including the low-acid PBT to heat in the presence of a depolymerization catalyst, thereby producing a macrocyclic polyester oligomer. The description of elements of the embodiments above can be applied to this aspect of the invention as well.

In preferred embodiments, the first unit operation includes maintaining the mixture under solvent reflux and, preferably, water is removed from refluxing solvent. In certain embodiments, the concentration of polymer solids in the first mixture is maintained within a range from about 30 wt.% to about 50 wt.%, and the polymer solids concentration of the second mixture is maintained within a range from about 0.75 wt.% to about 1.5 wt.%. The solvent preferably includes ortho-dichlorobenzene.

In certain embodiments, linear oligomer recyclate in the first unit operation is a by-product of the depolymerization of PBT in the second unit operation. In certain embodiments, the low-acid PBT product from the first unit operation has acid content no greater than about 15 meq/kg, no greater than about 10 meq/kg, no greater than about 8 meq/kg, or no greater than about 7 meq/kg. In certain embodiments, the weight ratio of the linear oligomer recyclate to the diol-rich PBT pre-polymer is at least initially greater than about 10:90, greater than about 15:85, greater than about 20:80, greater than about 25:75, or greater than about 30:70.

In certain embodiments, the second mixture includes a titanium depolymerization catalyst at a concentration no more than about 2 mol Ti per 100 mol butylene terephthalate repeat units. In certain embodiments, the second mixture includes a titanium depolymerization catalyst at a concentration from about 0.25 to about 1.25 mol Ti per 100 mol butylene terephthalate repeat units.

In certain embodiments, the process further comprises a third unit operation for Isolating the linear oligomer recyclate, wherein the third unit operation exposes an output stream of a depolymerization process to a temperature of at least about 200°C for at least about 5 minutes, thereby allowing precipitation of a metal-containing residue, and wherein the third unit operation filters the depolymerization process output following precipitation of the metal- containing residue, thereby isolating the linear oligomer recyclate.

The description of the embodiments of one aspect of this invention may be applied to other aspects of the invention as well.

### Brief Description of the Drawings

The objects and features of the invention can be better understood with reference to the drawings described below, and the claims. The drawings are not necessarily to scale, emphasis instead generally being placed upon illustrating the principles of the invention. In the drawings, like numerals are used to indicate like parts throughout the various views.

Figure 1 is a process flow diagram depicting unit operations In a process for producing a low-acid polyalkylene terephthalate.

Figure 2 is a process flow diagram depicting unit operations in a process for producing a macrocyclic polyester oligomer by polymerizing and subsequently depolymerizing/cyclizing a low-acid polyalkylene terephthalate, according to an illustrative embodiment of the invention.

Figure 3 is a graph depicting PBT molecule weight as a function of reaction time for reactions according to an illustrative embodiment of the Invention.

### Detailed Description

It is contemplated that compositions, mixtures, systems, methods, and processes of the claimed invention encompass variations and adaptations developed using information from the embodiments described herein. Adaptation and/or modification of the compositions, mixtures, systems, methods, and processes described herein may be performed by those of ordinary skill in the relevant art.

Throughout the description, where systems are described as having, including, or comprising specific components, or where processes and methods are described as having, including, or comprising specific steps, it is contemplated that, additionally, there are systems of the present invention that consist essentially of, or consist of, the recited components, and that there are processes and methods according to the present invention that consist essentially of, or consist of, the recited processing steps.

Similarly, where mixtures and compositions are described as having, including, or comprising specific compounds and/or materials, it is contemplated that, additionally, there are mixtures and compositions of the present invention that consist essentially of, or consist of, the recited compounds and/or materials.

It should be understood that the order of steps or order for performing certain actions is immaterial so long as the invention remains operable. Moreover, two or more steps or actions may be conducted simultaneously.

The mention herein of any publication, for example, in the Background section, is not an admission that the publication serves as prior art with respect to any of the claims presented herein. The Background section is presented for purposes of clarity and is not meant as a description of prior art with respect to any claim.

The '541 application describes systems and methods for preparing low-acid polyalkylene terephthalate from which macrocyclic polyester oligomer (MPO) can be advantageously manufactured, for example, using less titanium catalyst. The invention described in the present application introduces an alternate approach for producing low-acid polyalkylene terephthalate from which MPO can be advantageously manufactured. In certain embodiments, the acid content of commercially available polybutylene terephthalate (PBT) is reduced by adding a small amount of 1,4-butane diol (BDO) to a solution of the commercially available PBT in refluxing ortho-dichlorobenzene (oDCB) solvent. The low-acid PBT is then advantageously depolymerized to form cyclic polybutylene terephthalate (cPBT).

In other embodiments, a low-acid PBT is formed by reacting a diol-rich pre-polymer with low molecular weight, acid-stopped linears in refluxing ortho-dicholorobenzene (oDCB) solvent, such linears being a by-product of an MPO production process (e.g., a by-product of the depolymerization of PBT to form cPBT). The low-acid PBT is then advantageously depolymerized to form cPBT.

Low-acid PBT may also be prepared using a combination of the methods presented, e.g., preparation from (i) commercially-available PBT and BDO in oDCB (not an embodiment according to the invention), (ii) reaction of linear oligomer recyclate and diol-rich PBT pre-polymer in oDCB, and/or (iii) reaction of BDO and DMT in oDCB (not an embodiment according to the invention). The low-acid PBT and may then be depolymerized to form cPBT, according to methods described herein.

Low-acid PBT prepared as described herein may also be isolated and stabilized to prevent acid formation, and used as an engineering thermoplastic resin. Such low-acid PBT resins exhibit improved polymer properties, for example, increased hydrolytic and thermal stability, due to the low-acid content.

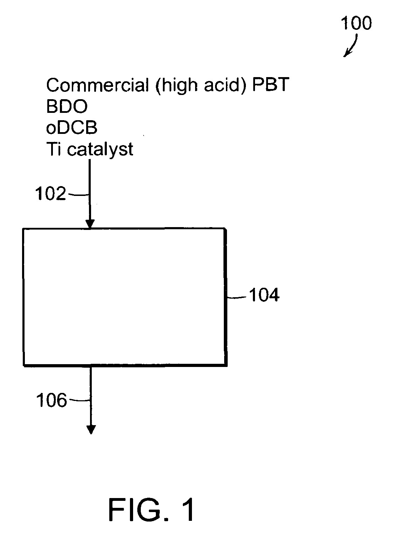

Figure 1 is a flow diagram 100 depicting a process for producing a low-acid polyalkylene terephthalate (not an embodiment according to the invention) according to an illustrative. In the example depicted in Figure 1, commercially-available (high acid) PBT reacts with a small amount of BDO in oDCB solvent in the presence of a catalyst to produce low acid PBT. One or more input streams 102 provide reactants including commercially-available PBT and BDO in a reactor 104. The one or more input streams 102 also provide solvent (e.g., ortho-dichlorobenzene, oDCB), and a titanium catalyst (e.g., tetraisopropyl titanate, TPT). The reaction mixture is maintained at about the boiling point of the solvent at atmospheric pressure, and water is removed from the refluxing solvent. The output stream 106 may be filtered for removal of non-PBT species, and/or stabilized to prevent formation of acid species. The low-acid PBT filtered from the output stream 106 may be pelletized, shaped, or otherwise processed so that the resulting PBT product is in a form that is convenient for use or transport. Alternatively, the low-acid PBT may be used directly as input in a depolymerization/cyclization process for the advantageous production of cPBT, as described elsewhere herein.

Typical commercial grades of PBT (feedstock PBT) have degree of polymerization from about 80 to about 220. It is desired to use enough BDO to convert substantially all of the acid end groups of the feedstock PBT to alcohols (hydroxybutyl ester end groups). It is found that use of BDO in an amount from about 2.0g to about 15g BDO per kg of PBT provides sufficient conversion of acid end groups, and, preferably, from about 3.7 to about 10.3g BDO per kg of PBT.

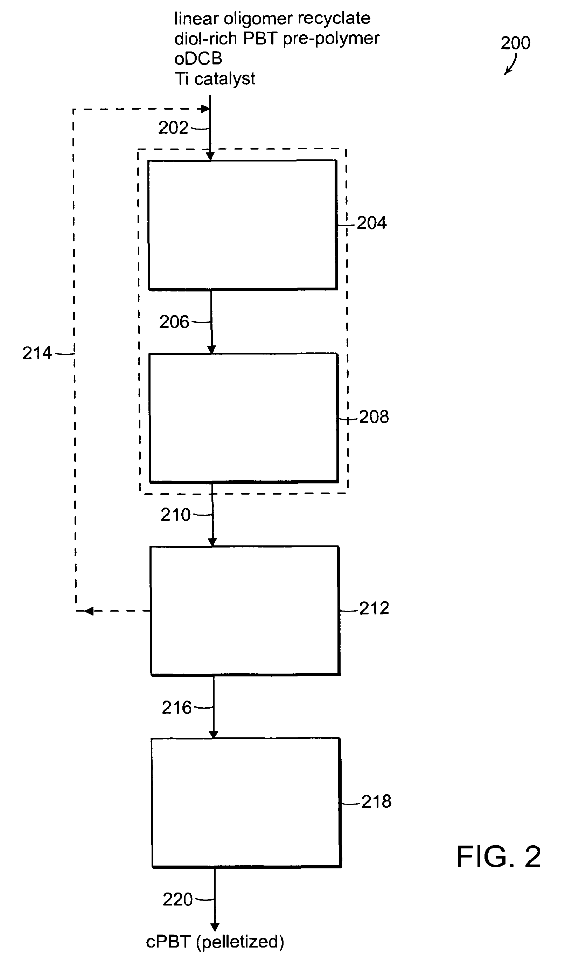

Figure 2 is a flow diagram 200 depicting a process for producing a macrocyclic polyester oligomer by preparing a low-acid polyalkylene terephthalate (e.g., low-acid PBT) and subsequently depolymerizing/cyclizing the low-acid polyalkylene terephthalate to form MPO (e.g., cPBT). In the example depicted in Figure 2, linear oligomer recyclate and diol-rich PBT pre-polymer react to produce low-acid PBT, which is depolymerized (cyclized) to form cPBT. The output stream 206 of the reaction step 204 contains low-acid PBT and is used as input in a depolymerization (cyclization) step 208. It may not be necessary to transfer the polymerization output 206 from one vessel to another, because depolymerization may be conducted using one or more of the reaction vessel(s) used in the reaction step 204. In one embodiment, a single unit operation includes both the production of low-acid polyalkylene terephthalate and depolymerization steps. In certain embodiments, the low-acid PBT is, essentially, an intermediate in the production of cPBT. The low-acid PBT produced thusly may be allowed to build to a molecular weight determined to provide improved overall cPBT production rate and/or properties.

The unit operations depicted in the figures may include input and output streams in addition to those shown. For example, in Figure 2, solvent may be added to dilute the product of the reaction step 204 to levels required for the depolymerization step 208. The process streams shown may contain components other than those listed. The representative contents of process streams are provided for convenience.

In the process of Figure 2, an output stream 210 of the depolymerization reaction may contain cPBT product in oDCB solvent, as well as byproducts including, for example, residual oligomer, catalyst residue, THF complexes, non-MPO macrocyclic material, and other compounds. The depolymerization output stream 210 may undergo filtration and/or other separation processing 212 so that cPBT product 216 and/or residual oligomers 214 may be extracted. The residual oligomers 214 may be recycled and used as part or all of the linear oligomer recyclate in the input stream 202. The cPBT product 216 can undergo pelletization and/or shaping 218 for conversion into an easily-transportable form 220.

A recyclate stream 214 rich in residual oligomer including, for example, carboxylic acid-terminated linear oligomer species, may be separated from the depolymerization output stream 210. The residual oligomer-rich stream 214 can then be used as input in the reaction step 204, thereby increasing overall conversion of monomers to cPBT. It is preferable, but not required, to remove catalyst residue before using oligomer byproduct as recyclate in the reaction step 204, for example, using methods described in the '541 application.

### Experimental Examples

Experimental examples described herein demonstrate the synthesis of low-acid PBT from: (i) commercially-available PBT and BDO in oDCB, and (ii) reaction of linear oligomer recyclate and diol-rich PBT pre-polymer in oDCB. The low-acid PBT formed thereby was then depolymerized to form cPBT.

Experiments 1 and 2 are control experiments in which no BDO was added. In Experiments 3-10, BDO was added to oDCB solutions of commercially-available PBT pellets at a concentration of about 40 wt.% solids. The commercially-available PBT that was used included Valox 315 grade PBT from GE Plastics and 6550 grade PBT from BASF. The Valox resin had a starting acid concentration of 39.2 mmol/kg and the BASF 6650 resin had a starting acid concentration of 23.7 mmol/kg. In each of Experiments 1-10, a 1L 3-necked round bottom flask equipped with a mechanical stirrer, a heated reflux condenser fitted with a short path distillation head with receiver, and an inert gas inlet was charged with PBT (220g or 1mol repeat units), BDO (various amounts ranging from 235-1140mg or 0.26 to 1.26 mol% of repeat units), anhydrous oDCB solvent (330g per 220g PBT to give 40% reactant solids) and 35mg fresh of TPT catalyst. BDO and oDCB were used without further purification. The reactants were heated to reflux at about 187°C (at 40% solids the atmospheric boiling point is about 187C) and the reacting mixture was sampled to determine the effect on molecular weight (Mw) as equilibration of added BDO took place. After the reaction was held at reflux for the desired time, the polymer solution was poured into a jar. Samples of the 40% PBT/oDCB solid were dried in vacuo at 100°C to yield dried, powdered polymer.

The PBT powder was then depolymerized to form cPBT. A flame dried, 3-necked 250ml round bottom flask equipped with a mechanical stirrer, a short path distillation head and condenser, and an inert gas inlet was charged with PBT (approximately 7mmol or 1.54g dry wt pellets or powder from solution polymerization to nearest 0.1 mg) and anhydrous oDCB (approximately 110ml or 143g to nearest 0.1 mg), then submerged into 220C oil bath. After the PBT dissolved and several mL of solvent distilled over head, to insure dryness of the reaction, 50ul of freshly prepared catalyst solution was added to provide an initial Ti concentration of 0.7mol% vs. PBT repeat units. The catalyst solution was Ti(BD:HG) (4:1) at concentration of 1M in Ti and was prepared according to the methods described in the '541 application, incorporated herein by reference. The reaction was then maintained under a positive pressure of dry nitrogen and sampled at 5,10 and 15 minutes to determine the initial rate of CBT formation. For the indicated experiments, additional catalyst was added at 15 minutes and a final sample of the reaction was taken at 2hrs to determine extent of CBT formation by HPLC technique.

In Experiment 11, low-acid PBT was prepared by reacting linear oligomer recyclate and diol-rich PBT pre-polymer in oDCB. Low molecular weight, diol-stopped PBT pre-polymer was prepared by the solution polymerization procedure described in the '541 application, incorporated herein by reference (and attached in the Appendix), using 4% excess BDO. DMT and BDO were reacted in oDCB at atmospheric pressure at about the boiling point of oDCB in the presence of TPT to prepare the PBT pre-polymer. The PBT pre-polymer had a molecular weight of 20.2K and had acid concentration less than 1 mmol/kg, such that virtually all end groups were alcohols. The linear oligomer recyclate consisted essentially of titanium-free (filtered) acid-stopped linears, isolated from a byproduct of PBT depolymerization (cPBT production). Filtration at 180°C was performed using dried linear waste cake from a cPBT production facility, as described in the above-referenced international patent application. The acid-stopped linears contained 238 mmol/kg acid and were virtually free of titanium.

A 1L 3-necked round bottom flask equipped with a mechanical stirrer, a heated reflux condenser, and an inert gas inlet was charged with solids (75 wt.% diol-capped PBT pre-polymer and 25 wt.% Ti-free linears), anhydrous oDCB solvent (330g per 220g solids to give 40% reactant solids), and 35mg fresh of TPT catalyst (initial Ti concentration of 0.7mol% vs. PBT repeat units). oDCB was used without further purification. The reactants were heated to reflux at about 187°C (at 40% solids the atmospheric boiling point is about 187C). After the reaction was held at reflux for seven hours, the polymer solution was poured into a jar. Samples of the 40% PBT/oDCB solid were dried in vacuo at 100°C to yield dried, powdered polymer.

The PBT powder was then depolymerized to form cPBT. A flame dried, 3-necked 250ml round bottom flask equipped with a mechanical stirrer, a short path distillation head and condenser, and an inert gas inlet was charged with PBT (approximately 7mmol or 1.54g dry wt pellets or powder from solution polymerization to nearest 0.1mg) and anhydrous oDCB (approximately 110ml or 143g to nearest 0.1mg), then submerged into 220C oil bath. After the PBT dissolved and several mL of solvent distilled over head, to insure dryness of the reaction, 50ul of freshly prepared catalyst solution was added to provide an initial Ti concentration of 0.7mol% vs. PBT repeat units. The catalyst solution was Ti(BD:HG) (4:1) at concentration of 1M in Ti and was prepared according to the methods described in the above-referenced international patent application. The reaction was then maintained under a positive pressure of dry nitrogen and sampled at 5,10 and 15 minutes to determine the initial rate of CBT formation. Additional catalyst was added at 15miutes and a final sample of the reaction was taken at 2hrs to determine extent of CBT formation by HPLC technique.

Table I shows data obtained from certain of Experimental Examples #3-10 demonstrating the reduction of the acid content of commercially-available PBT by addition of BDO to refluxing solution.

**Table 1: Preparation of Low-acid PBT from Commercially-available PBT**

| PBT Type (Expt. #) | BDO/220g PBT | Reflux Time | Initial Acid in PBT | Final Acid | Mw vs PS |
|---|---|---|---|---|---|
| BASF 6550 (#3) | 470 mg | 23 hr | 23.7 mmol/Kg | 8.6 mmol/Kg | 76.3 K |
| BASF 6550 (#5) | 470 mg | 1 hr | 23.7 mmol/Kg | 8.6 mmol/Kg | 55 K |
| BASF 6550 (#6) | 940 mg | 7 hr | 23.7 mmol/Kg | 6.8 mmol/Kg | 55.2 K |
| Valox 315 (#8) | 235 mg | 23 hr | 39.2 mmol/Kg | 29.1 mmol/Kg | 80.7 K |
| Valox 315 (#9) | 940 mg | 1 hr | 39.2 mmol/Kg | 11.0 mmol/Kg | 56.0 K |
| Valox 315 (#10) | 1175 mg | 2 hr | 39.2 mmol/Kg | 8.4 mmol/Kg | 56.0 K |

Table 1 demonstrates the effect of the reaction time and the amounts of BDO added on the acid content and final molecular weight of the PBT resin. The acid content of commercially-available PBT was significantly reduced by the methods described above (e.g., from 23.7 mmol/kg to less than 10 mmol/Kg, and from 39.2 mmol/Kg to less than 30, 25, 20, 15, or 10 mmol/Kg).

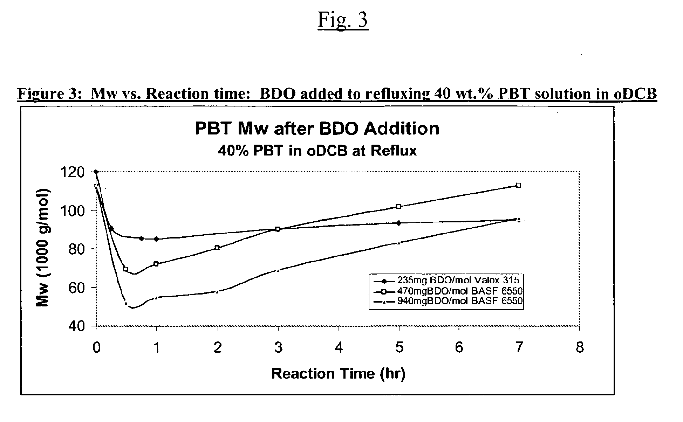

Several of the equilibration reactions were monitored for molecular weight over the course of the reaction. Figure 3 is a chart showing how molecular weight drop is related to the Level of BDO added and how molecular weight recovers over time as end groups react with each other. Using more BDO results in a lower-acid PBT, but causes a steeper molecular weight drop-off. Thus, the amount of BDO and the reaction time can be chosen for the desired acid reduction and molecular weight of the PBT to be depolymerised to form MPO.

Table 2 shows data obtained for Experiment Examples #1-11 during depolymerisation of low-acid PBT. (Examples 3-10 not within the scope of the present invention). The low-acid PBT for experiments #1-11 was prepared by the various methods described above, as denoted in Table 2 by the indicated amounts of initial reactants (e.g. commercial PBT, oDCB, BDO, diol-capped PBT, and/or Ti-free linears) and the indicated solution polycondensation (SP) time (e.g., 1, 2, 7, or 23 hours). Table 2 shows cPBT concentration as a function of time, along with the initial cPBT production rate, and the acid concentration and molecular weight of the PBT after SP, just prior to depolymerisation.

**Table 2: Depolymerization of Low-acid PBT to form cPBT**

| | | | cPRT Initial | Acid conc. of | |
|---|---|---|---|---|---|
| **Depolymerization to form cPBT** | Time | cPBT | Rate | PBT after SP | Mw PBT |
| (180C Depoly at 0.07M in oDCB 0.7% Catalyst) | (hr) | g/L | (g/L/hr) | (mmol/Kg) | (1000 g/mol) |
| **Example #1 (control)** | 0.083 | 0.273 | | | |
| Valox 315 + trace TPT | 0.167 | 0.326 | **0.58** | **39.2** | **71** |
| No added BDO | 0.250 | 0.370 | | | |
| 0.7% then 3% Ti at 1.5min | 2.000 | 9.137 | | | |
| | | | | | |
| **Example #2 (control)** | 0.083 | 0.558 | | | |
| BASF 6550 depoly | 0.167 | 1.117 | **6.17** | **23.7** | **11.4** |
| No added BDO | 0.250 | 1.586 | | | |
| 0.7% Ti cat at c=0 | 2.000 | 5.559 | | | |
| no additonal cat at 15min | | | | | |
| | | | | | |
| **Example #3** | | | | | |
| 220g 6550 40% in oDCB | 0.083 | 1.126 | | | |
| 470mg BDO 23hr SP | 0.167 | 1.970 | **10.2** | **8.6** | **76.3** |
| 0.7% thon 3% Ti at 15min | 2.000 | 9.207 | | | |
| | | | | | |
| **Example #4** | | | | | |
| 220 g 6550 40% in oDCB | 0.083 | 1.419 | | | |
| 940mg BDO 7hr SP | 0.167 | 2.341 | **10.6** | **6.8** | **65.6** |
| 0.7% then 3% Ti at 15min | 2.000 | 8.799 | | | |
| | | | | | |
| **Example #5** | 0.083 | 0.930 | | | |
| 22.0g 6550 40% in oDCB | 0.167 | 1.762 | **9.27** | **8.6** | **55** |
| 470mg BDO 1hr SP | 0.250 | 2.475 | | | |
| no additional cat at 15min | 2.000 | 7.761 | | | |
| | | | | | |
| **Example #6** | 0.083 | 1.283 | | | |
| 220g 6550 40% in oDCB | 0.167 | 2.250 | **11.5** | **6.8** | **55.2** |
| 940mg BDO 7hr SP | 0.250 | 3.191 | | | |
| no additonal cat at 15min | 2.000 | **8.447** | | | |
| | | | | | |
| **Example #7** | 0.083 | 0.150 | | | |
| Valox 315 depoly | 0.167 | 0.234 | **1.07** | **39.8** | **120** |
| 0.7% Ti cat at t=0 | 0.250 | 0.329 | | | |
| no additonal cat at 15min | 2.00 | **1.460** | | | |
| | | | | | |
| **Example #8** | 0.083 | 0.208 | | | |
| 220g Valox 315 40% in oDCB | 0.167 | 0.292 | **1.48** | **28.1** | **80.7** |
| 235mg BDO 23hr SP | 0.250 | 0.455 | | | |
| 0.7% then 3% Ti at 15min | 2.000 | **9.074** | | | |
| | | | | | |
| **Example #9** | 0.083 | 0.670 | | | |
| 220g Valox 315 40% in oDCB | 0.167 | 1.048 | **3.80** | **11** | **56.0** |
| 940mg BDO 1 hr SP | 0.250 | 1.303 | | | |
| no additonal cat at 15min | 2.000 | **3.776** | | | |
| | | | | | |
| **Example #10** | 0.083 | 1.424 | | | |
| 220g Valox 315 40% in oDCB | 0.167 | 2.349 | **9.82** | **8.4** | **56.0** |
| 1175mg BDO 2hr SP | 0.250 | 3.061 | | | |
| no additonal cat at 15min | 2.000 | **8.401** | | | |
| | | | | | |
| **Example #11** | | | | | |
| 75% 20K diol capped | 0.083 | 1.302 | | | |
| 25% Ti Free linears 7hr SP | 0.167 | 2.290 | **10.9** | **5.8** | **58.5** |
| 0.7% then 3% Ti at 15min | 0.250 | 3.118 | | | |
| | 2.000 | **8.610** | | | |

Table 2 shows that the acid level in the starting PBT was significantly reduced by both the addition of BDO to commercially-available PBT in refluxing oDCB solvent (Example #3-10), as well as by the reaction of diol-capped PBT pre-polymer with Ti-free linear recyclate in refluxing oDCB solvent (Example #11). Table 2 also shows favorable rates of cPBT formation and ultimate cPBT conversion using only 0.7 mol% Ti catalyst when a low-acid PBT is used. In some cases, the initial rate of conversion to cPBT is significantly increased using the low-acid PBT versus commercially-available PBT (e.g., rates of conversion of at least about 7, 8, 9, 10, or 11 g/L/hr), leading to more efficient, less costly MPO production. Table 2 also shows that it is possible to forego use of additional catalyst (e.g., after 15 minutes of depolymerization), and still obtain high ultimate cPBT conversion rates (e.g., see Example #6). Other processing advantages of using a low-acid PBT for depolymerization to cPBT are as described in the above-referenced '541 application.

### Equivalents

While the invention has been particularly shown and described with reference to specific preferred embodiments, it should be understood by those skilled In the art that various changes in form and detail may be made therein without departing from the scope of the invention as defined by the appended claims.

## Claims

1. A method for preparing a low-acid polybutylene terephthalate product, the method comprising maintaining a mixture at a temperature no greater than 240 °C and a pressure at least atmospheric pressure to produce a low-acid polybutylene terephthalate product, the mixture at least initially comprising:
(i) a diol-rich polybutylene terephthalate pre-polymer;
(ii) a linear oligomer recyclate from depolymerization of polybutylene terephthalate;
(iii) an organic solvent;
(iv) a catalyst; and
wherein the diol-rich pre-polymer has greater than 95 mol. % diol end caps.

2. The method of claim 1, comprising maintaining the mixture under solvent reflux and removing water from the refluxing solvent.

3. The method of claim 1, wherein the solvent comprises ortho-dichlorobenzene; or
wherein the low-acid polybutylene terephthalate product has acid content no greater than 10 meq/kg; or
wherein the diol-rich polybutylene terephthalate pre-polymer has not undergone solid state polycondensation prior to introduction to the linear oligomer recyclate; or
wherein the diol-rich polybutylene terephthalate pre-polymer has molecular weight below 40,000 g/mol.

4. The method of claim 1, wherein the weight ratio of the linear oligomer recyclate to the diol-rich polybutylene terephthalate pre-polyner is at least initially greater than 10:90; or
wherein the weight ratio of the linear oligomer recyclate to the diol-rich polybutylene terephthalate pre-polymer is at least initially greater than 25:75.

5. The method of claim 1, wherein the linear oligomer recyclate is isolated from a depolymerization process output prior to reaction with the diol-rich polybutylene terephthalate pre-polymer, wherein the recyclate is isolated by exposure of the depolymerization process output to a temperature of at least 200 °C for at least 5 minutes thereby allowing precipitation of a metal-containing residue, and by filtration of the depolymerization process output following precipitation of the metal-containing residue.

6. A method for preparing a macrocyclic polyester oligomer, the method comprising the steps of:
(a) maintaining a mixture at a temperature no greater than 240 °C and a pressure at least about atmospheric pressure and maintaining a concentration of polymer solids in the mixture within a first range to produce a low-acid polyalkylene terephthalate product having acid content no greater than 10 meq/kg, the mixture at least initially comprising:
(i) a diol-rich polyalkylene terephthalate pre-polymer;
(ii) a linear oligomer recyclate from depolymerization of a polyalkylene terephthalate;
(iii) an organic solvent; and
(iv) a catalyst;
(b) reducing the concentration of polymer solids in the mixture following step (a) and maintaining the concentration of polymer solids in the mixture within a second range in the presence of heat, thereby depolymerizing the low-acid polyalkylene terephthalate product from step (a) to produce a macrocyclic polyester oligomer; and
wherein the diol-rich pre-polymer has greater than 95 mol. % diol end caps.

7. The method of claim 6, wherein step (a) comprises maintaining the mixture under solvent reflux and removing water from the refluxing solvent.

8. The method of claim 6, wherein the linear oligomer recyclate in step (a) is a by-product of the depolymerization of step (b).

9. The method of claim 6, wherein step (a) comprises maintaining a concentration of polymer solids in the mixture within a first range from 30 wt.% to 50 wt.%, and step (b) comprises maintaining a concentration of polymer solids in the mixture within a range from 0.75 wt.% to 1.5 wt.%.

10. The method of claim 6, wherein the solvent comprises ortho-dichlorobenzene; or
wherein the polyalkylene terephthalate product comprises butylene terephthalate units and/or ethylene terephthalate units; or
wherein step (a) is conducted at a temperature between 170 °C and 210 °C; or
wherein the mixture in step (b) comprises a titanium depolymerization catalyst at a concentration no greater than 2 mol Ti per 100 mol alkylene terephthalate repeat units; or
wherein the mixture in step (b) comprises a titanium depolymerization catalyst at a concentration from 0.25 mol Ti per 100 mol alkylene terephthalate repeat units to 1.25 mol Ti per 100 mol alkylene terephthalate repeat units.

11. A continuous or semi-continuous process for preparing a macrocyclic polyester oligomer by depolymerizing low-acid polybutylene terephthalate, the process comprising:
a first unit operation for producing a low-acid polybutylene terephthalate product, wherein the first unit operation maintains a first mixture at a temperature no greater than 240 °C and a pressure at least about atmospheric pressure, the first mixture at least initially comprising a diol-rich polybutylene terephthalate pre-polymer, a linear oligomer recyclate from depolymerization of polybutylene terephthalate, an organic solvent, and a catalyst, and wherein an output stream comprising the low-acid polybutylene terephthalate product flows from the first unit operation to a second unit operation;
a second unit operation for depolymerization of the low-acid polybutylene terephthalate, wherein the second unit operation exposes a second mixture comprising the low-acid polybutylene terephthalate to heat in the presence of a depolymerization catalyst, thereby producing a macrocyclic polyester oligomer;
wherein the diol-rich pre-polymer has greater than 95 mol. % diol end caps.

12. The process of claim 11, wherein the first unit operation comprises maintaining the mixture under solvent reflux; or
wherein the linear oligomer recyclate in the first unit operation is a by-product of the depolymerization of polybutylene terephthalate in the second unit operation.

13. The process of claim 11, wherein the low-acid polybutylene terephthalate product from the first unit operation has acid content no greater than 10 meq/kg; or
wherein the weight ratio of the linear oligomer recyclate to the diol-rich polybutylene terephthalate pre-polymer is at least initially greater than 10:90.

14. The process of claim 11, further comprising a third unit operation for isolating the linear oligomer recyclate, wherein the third unit operation exposes an output stream of a depolymerization process to a temperature of at least 200 °C for at least 5 minutes thereby allowing precipitation of a metal-containing residue, and wherein the third unit operation filters the depolymerization process output following precipitation of the metal containing residue, thereby isolating the linear oligomer recyclate.

15. The process of claim 11, wherein the polymer solids concentration of the first mixture is maintained within a range from 30 wt.% to 50 wt.%, and wherein the polymer solids concentration of the second mixture is maintained within a second range from 0.75 wt.% to 1.5 wt.%; or
wherein the solvent comprises ortho-dichlorobenzene; or
wherein the second mixture comprises a titanium depolymerization catalyst at a concentration no greater than 2 mol Ti per 100 mol butylene terephthalate repeat units; or
wherein the second mixture comprises a titanium depolymerization catalyst at a concentration from 0.25 mol Ti per 100 mol butylene terephthalate repeat units to 1.25 mol Ti per 100 mol butylene terephthalate repeat units; or
wherein water is removed from refluxing solvent in the first unit operation.

## Revendications

1. Méthode préparation d'un produit de type téréphtalate de polybutylène à faible teneur en acide, la comprenant le maintien d'un mélange à une température ne dépassant pas 240 °C et à une pression au moins égale à la pression atmosphérique pour produire un produit de type téréphtalate de polybutylène à faible teneur en acide, le comprenant, au moins initialement :
(i) un prépolymère de téréphtalate de polybutylène riche en diols ;
(ii) un recyclat oligomère linéaire de la dépolymérisation du téréphtalate de polybutylène ;
(iii) un solvant organique ;
(iv) un catalyseur ; et
où le prépolymère riche en diols présente plus de 95 % en moles de groupements diols en coiffes terminales.

2. Méthode de la revendication 1, qui comprend le maintien du mélange sous reflux du solvant et l'élimination de l'eau du solvant à reflux.

3. Méthode de la revendication 1, ou le solvant comprend de l'ortho-dichlorobenzéne ; ou
où le produit de type téréphtalate polybutylène à faible teneur en acide a une teneur en acide qui ne dépasse pas 10 mEq/kg ; ou
où le prépolymère de téréphtalate de polybutylène riche en diols n'a pas été soumis à une polycondensation à l'état solide avant exposition au recyclat oligomère alinéaire ; ou
où le prépolymère de téréphtalate de polybutylène riche en diols a un poids moléculaire inférieur à 40 000 g/mol.

4. Méthode de la revendication 1, où le en poids entre le recyclat oligomère linéaire et le prépolymère de téréphtalate de polybutylène riche en diols est, au moins initialement, supérieur à 10:90 ; ou
où le rapport en poids entre le recyclat oligomère linéaire et le prépolymère de téréphtalate de polybutylène riche en diols est, au moins initialement, supérieur à 25:75.

5. Méthode de la revendication 1, où le recyclat oligomère linéaire est isolé des produits d'un processus de dépolymérisation avant d'être mis en réaction avec le prépolymère de téréphtalate de polybutylène riche en diols, où le recyclat est isolé par exposition des produits d'un processus de dépolymérisation à une température d'au moins 200 °C pendant au moins 5 minutes, produisant ainsi la précipitation d'un résidu contenant un métal, et par filtration des produits d'un processus de dépolymérisation après précipitation du résidu contenant un métal.

6. Méthode de préparation d'un oligomère de polyester macrocyclique, la méthode comprenant les étapes consistant à :
(a) maintenir un mélange à une température ne dépassant pas 240 °C et à une pression au moins égale à environ la pression atmosphérique et maintenir une concentration en solides polymères dans le mélange dans une première fourchette pour produire un produit de type téréphtalate de polyalkylène à faible teneur en acide dont la teneur en acide ne dépasse pas 10 mEq/kg, le comprenant, au moins initialement :
(i) un prépolymère de de polyalkylène riche en diols ;
(ii) un recyclat oligomère linéaire de la dépolymérisation du téréphtalate de polyalkylène ;
(iii) un solvant ; et
(iv) un catalyseur ;
(b) réduire la concentration en solides polymères dans le mélange obtenu après l'étape (a) et maintenir la concentration en solides polymères dans le mélange dans une fourchette en la présence de chaleur, conduisant ainsi à la dépolymérisation du produit de type téréphtalate polyalkylène à faible teneur en acide à l'étape (a) produire un oligomère de polyester macrocyclique ; et
où le prépolymère riche en diols présente plus de 95 % en moles de groupements diols en coiffes terminales.

7. Méthode de la revendication 6, où l'étape (a) comprend le maintien du mélange sous reflux du solvant et l'élimination de l'eau du solvant à reflux.

8. Méthode de la revendication 6, où le recyclat oligomère linéaire utilisé à l'étape (a) est un sous-produit de la dépolymérisation de l'étape (b).

9. Méthode de la revendication 6, où l'étape (a) comprend le maintien d'une concentration en solides polymères dans le mélange une première fourchette qui va de 30 % en poids à 50 % en poids, et où l'étape (b) comprend le maintien d'une concentration en solides polymères dans le mélange dans une fourchette qui va de 0,75 % en poids à 1,5 % en poids.

10. Méthode de la revendication 6, où le solvant comprend de l'ortho-dichlorobenzène; ou
où le produit de type téréphtalate de polyalkylène comprend des motifs téréphtalate de butylène et/ou des motifs téréphtalate d'éthylène ; ou
où l'étape (a) est effectuée à une température qui est entre 170 °C et 210 °C ; ou
où le mélange de l'étape (b) comprend un catalyseur de dépolymérisation au titane à une concentration ne dépassant pas 2 moles de Ti pour 100 moles de motifs de répétition de type téréphtalate d'alkylène ; ou
où le mélange de l'étape (b) comprend un catalyseur de dépolymérisation au titane à une concentration qui va de 0,25 mole de Ti pour 100 moles de motifs de répétition de type téréphtalate d'alkylène à 1,25 mole de Ti pour 100 moles de motifs de répétition de type téréphtalate d'alkylène.

11. Processus continu ou semi-continu de préparation d'un oligomère de polyester macrocyclique par dépolymérisation d'un de polybutylène à faible teneur en acide, le processus comprenant :
une première opération unitaire permettant d'obtenir un produit de type téréphtalate de polybutylène à faible teneur en acide, où la première opération unitaire consiste à maintenir un premier mélange à une température ne dépassant pas 240 °C et à une pression au moins égale à environ la pression atmosphérique, le premier mélange comprenant, au moins initialement, un prépolymère de téréphtalate de polybutylène riche en diols, un recyclat oligomère linéaire de la dépolymérisation du téréphtalate de polybutylène, un solvant organique et un catalyseur, un flux de comprenant le produit de type téréphtalate de polybutylène à faible teneur en acide passant de la première opération unitaire à une seconde opération unitaire ;
une seconde opération unitaire permettant d'effectuer la dépolymérisation du téréphtalate de polybutylène à faible teneur en acide, où la seconde opération unitaire consiste à exposer un second mélange comprenant le téréphtalate de polybutylène à faible teneur en acide à la chaleur en la présence d'un catalyseur de dépolymérisation, produisant ainsi un oligomère de polyester macrocyclique ;
où le prépolymère riche en diols présente plus de 95 % en moles de groupements diols en coiffes terminales,

12. Processus de la revendication 11, où la première opération unitaire comprend le maintien du mélange sous reflux du solvant ; ou
où le recyclat oligomère linéaire utilisé à la première opération unitaire est un sous-produit de la dépolymérisation du téréphtalate de polybutylène de la seconde opération unitaire.

13. Processus de la revendication 11, où le produit de type téréphtalate de polybutylène à faible teneur en acide résultant de la première opération unitaire a une teneur en acide qui ne dépasse pas 10 mEq/kg ; ou
où le rapport en poids entre le recyclat oligomère linéaire et le prépolymère téréphtalate de polybutylène riche en diols est, au moins initialement, supérieur à 10:90.

14. Processus de la revendication 11, qui comprend également une troisième opération unitaire permettant d'isoler le recyclat oligomère linéaire, où la troisième opération unitaire consiste à exposer un flux de sortie d'un processus de dépolymérisation à une température d'au moins 200 °C pendant au moins 5 minutes, produisant ainsi la précipitation d'un résidu contenant un métal, et où la troisième opération unitaire comprend la filtration des produits du processus de dépolymérisation après précipitation du résidu contenant un métal, conduisant ainsi à l'isolement du recyclat oligomère linéaire.

15. Processus de la revendication 11, où la concentration en polymères du premier mélange est maintenue une fourchette qui va de 30 % en poids à 50 % en poids et où la concentration en solides polymères du second et maintenue dans une seconde fourchette qui va de 0,75 % en poids à 1,5 % en poids ; ou
où le solvant comprend de l'ortho-dichlorobenzène; ou
où le second mélange comprend un catalyseur de dépolymérisation au titane à une concentration ne dépassant pas 2 moles de Ti pour 100 moles de motifs de répétition due type téréphtalate de butylène ; ou
où le second mélange comprend un catalyseur de dépolymérisation au titane à une concentration qui va de 0,25 mole de Ti pour 100 moles de motifs de répétition de type téréphtalate de butylène à 1,25 mole de Ti pour 100 moles de motifs de répétition de type téréphtalate de butylène ; ou
où l'eau est éliminée du solvant à reflux durant la première opération unitaire.

## Patentansprüche

1. Verfahren zur Herstellung eines schwach sauren Polybutylenterephthalat-Produkts, wobei das Verfahren das Aufrechterhalten einer Mischung bei einer Temperatur von nicht höher als 240°C und einem Druck von mindestens Atmosphärendruck umfasst, um ein schwach saures Polybutylenterephthalat-Produkt zu erzeugen, wobei die Mischung zumindest anfangs Folgendes umfasst:
(i) ein Diol-reiches Polybutylenterephthalat-Präpolymer;
(ii) ein lineares Oligomer-Recyclat aus der Depolymerisation von Polybutylenterephthalat;
(iii) ein organisches Lösungsmittel;
(iv) Katalysator; und
worin das Diol-reiche Präpolymer mehr als 95 mol-% Diol-Endgruppen aufweist.

2. Verfahren nach Anspruch 1, das das Aufrecherhalten der Mischung unter Lösungsmittelrückfluss und das Entfernen von Wasser aus dem unter Rückfluss stehenden Lösungsmittel umfasst.

3. Verfahren nach Anspruch 1, worin das Lösungsmittel ortho-Dichlorbenzol umfasst; oder
worin das schwach saure Polybutylenterephthalat-Produkt einen Säuregehalt von nicht mehr als 10meq/kg aufweist; oder
worin das Diol-reiche Polybutylenterephthalat-Präpolymer vor der Beinführung in das lineare Oligomer-Recyclat keine Festphasenpolykondensation eingegangen ist; oder
worin das Diol-reiche Polybutylenterephthalat-Präpolymer ein Molekulargewicht unter 40 000 g/mol hat.

4. Verfahren nach Anspruch 1, worin das Gewichtsverhältnis des linearen Oligomer-Recyclats zum Diol-reichen Polybutylenterephthalat-Präpolymer zumindest anfangs größer als 10 : 90 ist; oder
worin das Gewichtsverhältnis des linearen Oligomer-Recyclats zum Diol-reichen Polybutylenterephthalat-Präpolymer zumindest anfangs größer als 25 : 75 ist.

5. Verfahren nach Anspruch 1, worin das lineare Oligomer-Recyclat aus einer Produktionsmenge Depolymerisationsverfahrens vor der Reaktion mit dem Diol-reichen Polybutylenterephthalat-Präpolymer isoliert wird, worin das Recyclat durch Folgendes isoliert wird: Aussetzen der Produktionsmenge des Depolymerisationsverfahrens gegenüber einer Temperatur von mindestens 200°C für mindestens 5 Minuten, wodurch die Ausfällung eines metallhaltigen Rückstands ermöglicht wird, und Filtrieren der Produktionsmenge des Depolymerisationsverfahrens nach der Ausfällung des metallhaltigen Rückstands.

6. Verfahren zur Herstellung eines makrocyclischen Polyesteroligomers, wobei das Verfahren die folgenden Schritte umfasst:
(a) Aufrechterhalten einer Mischung bei einer Temperatur von nicht höher als 240°C und einem Druck von mindestens etwa Atmosphärendruck und Aufrechterhalten einer Konzentration von Polymerfeststoffen in der Mischung innerhalb eines ersten Bereichs, um ein schwach saures Polyalkylenterephthalat-Produkt mit einem Säuregehalt von nicht mehr als 10 meq/kg zu erzeugen, wobei die Mischung zumindest anfangs Folgendes umfasst:
(i) ein Diol-reiches Polyalkylenterephthalat-Präpolymer;
(ii) ein lineares Oligomer-Recyclat aus der Depolymerisation eines Polyalkylenterephthalats;
(iii) ein organisches Lösungsmittel; und
(iv) Katalysator;
(b) Verringern der Konzentration von Polymerfeststoffen in der Mischung nach dem Schritt (a) und Aufrechterhalten der Konzentration von Polymerfeststoffen in der Mischung innerhalb eines zweiten Bereichs in Gegenwart von Wärme, wodurch das schwach saure Polyalkylenterephthalat-Produkt aus dem Schritt (a) depolymerisiert wird, um ein makrocyclisches Polyesteroligomer zu und
worin das Diol-reiche Präpolymer mehr als 95 mol-% Diol-Endgruppen aufweist.

7. Verfahren nach Anspruch 6, worin der Schritt (a) das Aufrechterhalten der Mischung unter Lösungsmittelrückfluss und das von aus dem unter Rückfluss stehenden Lösungsmittel umfasst.

8. Verfahren nach Anspruch 6, worin das lineare Oligomer-Recyclat im Schritt (a) ein Nebenprodukt der Depolymerisation vom Schritt (b) ist.

9. Verfahren nach Anspruch 6, worin der Schritt (a) das Aufrechterhalten einer, Konzentration von Polymerfeststoffen in der Mischung innerhalb eines ersten Bereichs von 30 Gew.-% bis 50 Gew.-% umfasst und der Schritt (b) das Aufrechterhalten einer Konzentration von Polymerfeststoffen in der Mischung innerhalb eines Bereichs von 0,75 Gew.-% bis 1,5 Gew.-% umfasst.

10. Verfahren nach Anspruch 6, worin das Lösungsmittel ortho-Dichlorbenzol umfasst; oder
worin das Polyalkylenterephthalat-Produkt Butylenterephthalat-Einheiten und/oder Ethylenterephthalat-Einheiten umfasst; oder
worin der Schritt (a) bei einer Temperatur zwischen 170°C und 210°C ausgeführt wird; oder
worin die Mischung im Schritt (b) einen Titan-Depolymerisationskatalysator in einer Konzentration von nicht größer als 2 mol Ti pro 100 mol Alkylenterephthalat-Wiederholungseinheiten umfasst; oder
worin die Mischung im Schritt (b) einen Titan-Depolymerisationskatalysator in einer Konzentration von 0,25 mol Ti pro 100 mol Alkylenterephthalat-Wiederholungseinheiten bis 1,25 mol Ti pro 100 mol Alkylenterephthalat-Wiederholungseinheiten umfasst.

11. Kontinuierliches oder halbkontinuierliches Verfahren zur Herstellung eines makrocyclischen Polyesteroligomers durch Depolymerisation von schwach saurem Polybutylenterephthalat, wobei das Verfahren Folgendes umfasst:
eine erste Grundoperation zur Erzeugung eines schwach sauren Polybutylenterephthalat-Produkts, worin die erste Grundoperation eine erste Mischung bei einer Temperatur von nicht höher als 240°C und einem Druck von mindestens etwa Atmosphärendruck aufrechterhält, wobei die erste Mischung zumindest anfangs ein Diol-reiches Polybutylenterephthalat-Präpolymer, ein lineares Oligomer-Recyclat aus der Depolymerisation von Polybutylenterephthalat, ein organisches Lösungsmittel und einen Katalysator umfasst, und worin ein Produktionsmengenstrom, der das schwach saure Polybutylenterephthalat-Produkt umfasst, von der ersten Grundoperation zu einer zweiten Grundoperation fließt;
eine zweite Grundoperation für die Depolymerisation des schwach sauren Polybutylenterephthalats, worin die zweite Grundoperation eine zweite Mischung, die das schwach saure Polybutylenterephthalat umfasst, gegenüber Wärme in Gegenwart eines Depolymerisationskatalysators aussetzt, wodurch ein makrocyclisches Polyesteroligomer erzeugt wird;
worin das Diol-reiche Präpolymer mehr als 95 mol-% Diol-Endgruppen aufweist.

12. Verfahren nach Anspruch 11, worin die erste Grundoperation das Aufrechterhalten der Mischung unter Lösungsmittelrückfluss umfasst; oder
worin das lineare Oligomer-Recyclat in der ersten Grundoperation ein Nebenprodukt der Depolymerisation von Polybutylenterephthalat in der zweiten Grundoperation ist.

13. Verfahren nach Anspruch 11, worin das schwach saure Polybutylenterephthalat-Produkt aus der ersten Grundoperation einen Säuregehalt von nicht mehr als 10meq/kg aufweist; oder
worin das Gewichtsverhältnis des linearen Oligomer-Recyclats zum Diol-reichen Polybutylenterephthalat-Präpolymer zumindest anfangs größer als 10 : 90 ist.

14. Verfahren nach Anspruch 11, das weiter eine dritte Grundoperation zur Isolierung des linearen Oligomer-Recyclats umfasst, worin die dritte Grundoperation einen Produktionsmengenstrom eines Depolymerisationsverfahrens gegenüber einer Temperatur von mindestens 200°C für mindestens 5 Minuten aussetzt, wodurch die Ausfällung eines metallhaltigen Rückstands ermöglicht wird, und worin die dritte Grundoperation die Produktionsmenge des Depolymerisationsverfahrens nach der Ausfällung des metallhaltigen Rückstands filtriert, wodurch das lineare Oligomer-Recyclat isoliert wird.

15. Verfahren nach Anspruch 11, worin die Konzentration von Polymerfeststoffen der ersten Mischung innerhalb eines Bereichs von 30 Gew.-% bis 50 Gew.-% aufrechterhalten wird und worin die Konzentration von Polymerfeststoffen der zweiten Mischung innerhalb eines zweiten Bereichs von 0,75 Gew.-% bis 1,5 Gew.-% aufrechterhalten wird; oder
worin das Lösungsmittel ortho-Dichlorbenzol umfasst; oder
worin die zweite Mischung einen Titan-Depolymerisationskatalysator in einer Konzentration von nicht größer als 2 mol Ti pro 100 mol Butylenterephthalat-Wiederholungseinheiten umfasst; oder
worin die Mischung einen Titan-Depolymerisationskatalysator in einer Konzentration von 0,25 mol Ti pro 100 mol Butylenterephthalat-Wiederholungseinheiten bis 1,25 mol Ti pro 100 mol Butylenterephthalat-Wiederholungseinheiten umfasst; oder
worin Wasser aus dem unter Rückfluss stehenden Lösungsmittel in der ersten Grundoperation entfernt wird.
